# FASCICULE DE BREVET EUROPEEN

(11) **EP 2 031 953 B1**
(45) Date de publication et mention de la délivrance du brevet: **10.08.2011**
(21) Numéro de dépôt: 07823519.9
(22) Date de dépôt: 12.06.2007
(51) Int. Cl.: A01B 15/06

(54) **OUTIL DE TRAVAIL COMPORTANT UN DISPOSITIF D'APPUI ET MACHINE DE TRAVAIL DU SOL EQUIPEE D'UN TEL OUTIL**
ARBEITSWERKZEUG MIT EINER LAGERVORRICHTUNG UND BODENARBEITSMASCHINE MIT DIESEM WERKZEUG
WORKING TOOL COMPRISING A BEARING DEVICE, AND SOIL-WORKING MACHINE EQUIPPED WITH SUCH A TOOL

(30) Priorité: 14.06.2006 FR 0652122; 10.01.2007 FR 0752592
(43) Date de publication de la demande: 11.03.2009
(73) Titulaire: Kuhn-Huard S.A., 44142 Chateaubriant Cedex (FR)
(72) Inventeur: RENAULT, Christophe, F-35230 Bourgbarre (FR); CUEILLE, Laurent, F-44110 Erbray (FR)
(74) Mandataire: Andres, Jean-Claude
(86) Numéro de dépôt international: PCT/FR2007/051422
(87) Numéro de publication internationale: WO 2008/000989

(56) Documents cités:
- EP-A- 1 472 921
- EP-A- 1 723 841
- AU-B2- 439 777
- DE-A1-102004 040 367
- FR-A- 2 248 769
- US-A- 1 497 144
- US-A- 2 906 015

## Description

La présente invention concerne un outil de travail du sol comportant un support sur lequel sont montés, de manière amovible, un soc et un versoir, ledit soc étant lié audit support, en dessous et sensiblement dans le prolongement dudit versoir, via un dispositif de fixation, ledit soc comportant une partie de liaison et une partie active, ladite partie de liaison présentant une rive destinée à être proche et en regard du bord du versoir au montage et un dispositif d'appui destiné à être engagé dans un logement correspondant et destiné à reprendre les efforts lors du travail au moyen d'une face d'appui.

La présente invention trouvera son application, de manière générale, dans le domaine des matériels destinés à travailler le sol avec des outils de travail susceptibles d'être remplacés plus ou moins régulièrement. Plus particulièrement, l'invention trouvera son application dans les domaines des machines agricoles et/ou des engins de travaux publics. Le contact répété des outils avec le sol engendre une usure progressive de ces derniers. Par conséquent, après un certain nombre d'heures de travail, l'utilisateur a besoin de remplacer les outils. Cette opération de remplacement est souvent fastidieuse.

Une charrue, par exemple, est un instrument agricole qui permet de labourer le sol. La charrue est équipée de corps de labour qui entrent dans le sol et qui sont protégés par des socs. On sait que les socs sont soumis à une usure plus ou moins rapide par abrasion selon la nature du sol et les conditions d'utilisation. Après quelques dizaines d'heures dans des terres abrasives, le profil d'attaque du soc s'émousse et/ou s'arrondit : on dit alors communément que le soc est usé et il ne peut plus remplir correctement sa fonction. L'effort de traction nécessaire pour découper la bande de terre est également bien plus élevé en présence d'un soc usé. Pour retrouver des conditions de travail optimales, l'ensemble des socs usés est à remplacer. Cette opération est longue par le nombre important de dispositifs de fixation à démonter puis à remonter.

Dans le document AU 439 777, la fixation d'un soc de charrue sur un sep est réalisée par l'intermédiaire de deux butées. Ces deux butées en forme de languette sont destinées à coopérer avec deux ouvertures ménagées dans le sep. Pour le montage, les languettes sont introduites dans les ouvertures du sep sensiblement dans le sens de la longueur du soc et vers l'arrière. Ces languettes, dans la partie de fixation du soc, sont obtenues par crevage, c'est-à-dire qu'on fait un découpage incomplet dans le soc et on repousse la matière pour obtenir la languette. Le soc est maintenu sur le sep au moyen d'un dispositif de fixation.

Lors du labour, lorsque la terre glisse le long du soc vers le versoir pour le retournement, le flux de la terre est freiné au niveau des languettes. La terre s'accumule et forme une bande de collage qui entraîne une usure plus rapide et prononcée.

Le document US 4 036 307 décrit aussi un soc avec des languettes qui sont obtenues par crevage. Pour éviter l'accumulation de terre au niveau du découpage des languettes et favoriser l'écoulement de la terre, la face du soc en contact avec la terre est recouverte d'une feuille résistante à l'abrasion. Le coût de réalisation de ce soc est relativement élevé.

Le document DE 10 2004 040 367 présente une fixation d'une pointe sur un sep. La pointe est positionnée sur le sep via une butée et est maintenue avec une seule vis. La butée de position présente une forme de crochet permettant le blocage de la pointe sur le sep. La forme particulière de crochet impose des tolérances de fabrication précise notamment quant à l'épaisseur du sep ainsi qu'à la hauteur de ce crochet. II est donc nécessaire de rectifier la partie du sep qui doit recevoir la butée en forme de crochet pour rendre le montage possible et/ou reprendre la forme du crochet par usinage. L'opération de rectification supplémentaire augmente le coût de la fixation.

Il existe également dans l'état de la technique d'autres types d'outils de travail du sol. Le document FR 2 603 151 se rapporte à une dent pour machine agricole. La dent est composée d'un étançon, d'un soc et d'un déflecteur. Le soc présente une partie active qui va s'user au travail et une partie de liaison pour fixer le soc sur l'étançon au moyen d'un dispositif de fixation. Ce dispositif de fixation est du type vis/écrou. La vis traverse le soc et l'étançon et la fixation est sécurisée par l'écrou. L'écrou est serré pour verrouiller et bloquer la fixation du soc sur l'étançon.

Lors du travail, la partie active du soc est exposée à une action d'usure par contact avec le sol lors de l'exécution d'une opération de travail du sol et un effort important s'exerce au niveau de sa partie active. Il s'agit d'un effort dirigé sensiblement dans une direction opposée à la direction d'avance lors du travail. Cet effort, au niveau de la partie active, tend à faire basculer le soc autour de l'étançon et notamment autour de l'arête inférieure de l'étançon. Ce basculement est empêché par le serrage du dispositif de fixation, c'est l'écrou avec la vis qui assure le serrage du soc contre l'étançon. L'effort de travail, s'exerçant au niveau de la partie active du soc, est entièrement encaissé par le dispositif de fixation. Le serrage de l'écrou sur la vis est donc impératif. L'effort transite par le dispositif de fixation, il est donc concentré au niveau du dispositif de fixation. Ce dernier doit donc être dimensionné de manière suffisante pour pouvoir supporter cet effort de travail.

Avec un dispositif de fixation du type vis/écrou, le risque de serrage insuffisant ou de desserrage au cours du travail est bien présent. Si le soc n'est pas correctement plaqué par serrage contre l'étançon, cela entraîne une détérioration prématurée du soc et/ou du dispositif de fixation. La fixation est dépendante du couple de serrage de la vis et de l'écrou. D'autre part, une fixation vis/écrou est une fixation nécessitant un temps relativement long pour dévisser et revisser complètement l'écrou pour remplacer les socs usagés.

Le document EP 1 723 841 qui montre les caractéristiques du préambule de la revendication 1, décrit également une fixation pour une dent destinée à travailler le sol. Cette fixation utilise un grand nombre de pièces permettant le maintien du soc sur l'étançon, notamment un sabot, une aile de soc, un verrou et un ressort. Le soc comporte une partie de fixation et une partie active. La partie de fixation est réalisée en deux parties dont chacune présente un crochet. Le crochet supérieur est glissé entre le déflecteur et l'étançon et sa partie haute vient s'appuyer contre le sabot. Le crochet inférieur s'enfile dans la partie basse du sabot jusqu'à ce que la partie haute du crochet supérieur soit en appui contre le sabot. Le maintien du crochet inférieur est réalisé par l'aile de soc dont la position est bloquée au moyen du verrou et du ressort alors que le crochet supérieur, en butée contre le sabot, est maintenu par le serrage d'un boulon. Le crochet supérieur est pincé entre le déflecteur et l'étançon par le boulon.

Un tel dispositif de fixation nécessite de nombreuses pièces dont la réalisation doit être relativement précise pour une bonne fixation du soc sur l'étançon, sa réalisation est donc très coûteuse. En effet, la position du crochet inférieur derrière le soc doit être précise pour permettre une bonne fixation avec l'aile de soc. D'autre part, il est important que le crochet supérieur soit toujours en butée contre le sabot au travail comme au repos pour que les efforts ne transitent pas par le crochet inférieur. Pour garantir cela, le crochet supérieur est bloqué entre l'étançon et le déflecteur par un boulon serré. Cette fixation est donc également dépendante du couple de serrage du boulon.

La présente invention a pour but de remédier aux différents inconvénients précités et notamment de proposer un système de fixation rapide pour lequel les contraintes au niveau du dispositif d'appui sont réduites et pour lequel le flux de terre n'est pas freiné et ne provoque pas de bande de collage de terre. Le système de fixation doit être efficace du point de vue de la tenue dans le temps et ne doit pas être dépendant du couple de serrage du dispositif de fixation. Le remplacement d'un tel outil ne devrait pas imposer un travail long et pénible à l'utilisateur.

A cet effet, une importante caractéristique de l'invention consiste en ce que ledit dispositif d'appui est disposé dans le voisinage de la rive dudit soc et sensiblement dans l'ombre dudit versoir, que ladite face d'appui dépasse sensiblement de cette rive et que le montage du dispositif de fixation est flottant.

Ainsi, l'effort appliqué au niveau du dispositif d'appui est réduit étant donné que celui-ci est disposé au niveau de la rive. De part la disposition du dispositif d'appui dans l'ombre, derrière le versoir, le dispositif d'appui n'est pas directement en contact avec la terre mais il est protégé par le versoir. Il ne freine donc pas le flux de terre lors du travail. Selon un autre avantage, l'effort de travail transite exclusivement par le dispositif d'appui. Le couple de serrage du dispositif de fixation n'est plus déterminant, son montage est avantageusement flottant.

L'invention a aussi pour objet une machine de travail du sol équipée avec au moins un outil de travail du sol selon l'invention. L'invention trouvera son application sur des engins de travaux publics et également dans le domaine des machines agricoles. Ainsi, une charrue ou un appareil à dents comportant au moins un outil de travail du sol fait partie du domaine d'application de l'invention.

D'autres caractéristiques et avantages de l'invention ressortiront des revendications et de la description ci-après de plusieurs exemples de réalisation non limitatifs de l'invention avec référence aux dessins annexés dans lesquels :
- la **figure 1** représente une vue en coupe d'un outil de travail du sol selon un premier exemple de réalisation,
- la **figure 2** représente une vue arrière simplifiée de la figure 1,
- la **figure 3** est une vue générale de face de l'outil de travail selon le premier exemple de réalisation,
- la **figure 4** représente une vue éclatée d'un deuxième exemple de réalisation,
- la **figure 5** représente une vue isométrique de l'arrière de l'outil de travail du sol de la figure 4,
- la **figure 6** représente une vue de côté d'un outil de travail du sol selon un troisième exemple de réalisation,
- la **figure 7** représente plus en détail une partie de la figure 6,
- la **figure 8** représente une vue isométrique en éclatée de l'outil de travail de la figure 6,

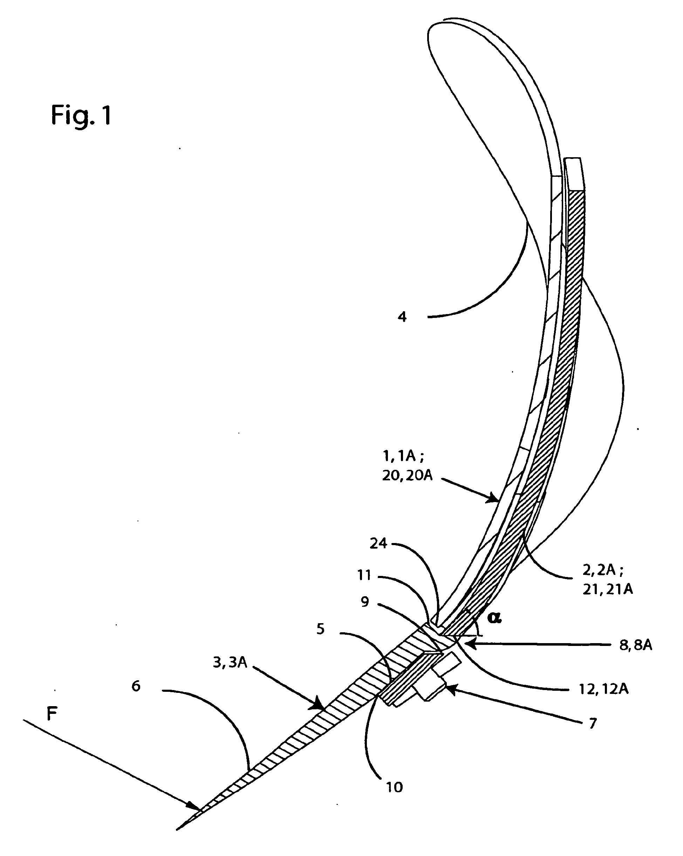

Les figures représentent un outil de travail du sol (1) selon plusieurs exemples de réalisation de l'invention. La figure 1 montre un premier exemple de réalisation d'un outil de travail du sol (1) selon une vue en coupe. Un tel outil (1) est destiné à travailler la terre, il est donc soumit à une usure par frottement de la terre appelée aussi abrasion. L'outil (1) comporte notamment un support (2) sur lequel sont montés, de manière amovible, un soc (3) et un versoir (4). Le soc (3) découpe ou tranche une bande de terre qui est ensuite retournée par le versoir (4). L'usure du soc (3) est bien plus importante que l'usure du versoir (4). Le soc (3) s'use en découpant la terre et son profil d'attaque s'arrondit. Pour retrouver à nouveau de bonnes conditions de travail, le soc (3) est remplacé.

Le soc (3) présente une partie de liaison (5) et une partie active (6). Le soc (3) découpe une bande de terre qui est retournée par le versoir (4) lors du travail. D'une manière connue, le soc (3) est cambré pour faciliter le soulèvement de la bande de terre vers le versoir (4). Le soc (3) est fortement soumis à l'usure lors du travail et notamment au niveau de sa partie active (6). La partie active (6) est exposée à une action d'usure par contact avec le sol lors de l'exécution d'une opération de travail du sol. La partie de liaison (5) s'étend sensiblement dans le prolongement de la partie active (6) de manière à réaliser une forme globale sensiblement régulière. La partie de liaison (5), disposée à l'opposé de la partie active (6), est protégée par la partie active (6). Le soc (3) est lié au support (2), en dessous et sensiblement dans le prolongement du versoir (4) au moyen d'un dispositif de fixation (7). La partie de liaison (5) présente une rive (11) qui est proche et en regard du bord du versoir (4) lors du montage. La partie de liaison (5) présente également un dispositif d'appui (8). Ce dispositif d'appui (8) reprend les efforts (F) lors du travail au moyen d'une face d'appui (12). Le dispositif d'appui (8) est engagé dans un logement (9) ménagé dans le support (2) ou au voisinage du versoir (4).

Selon une importante caractéristique de l'invention, le dispositif d'appui (8) est disposé dans le voisinage de la rive (11) dudit soc (3) et sensiblement dans l'ombre dudit versoir (4) et que la face d'appui (12) dépasse sensiblement de cette rive (11). Lors du travail, le dispositif d'appui (8) disposé derrière le versoir (4) n'est donc pas directement en contact avec le flux de terre, il est protégé de l'usure par le versoir (4).

Le dispositif d'appui (8) est conformé de manière à récupérer l'effort (F) de travail. Lors du travail, l'outil (1) avec son soc (3) découpe le sol et un effort (F) s'exerce au niveau de la partie active (6). Cet effort (F) est essentiellement dirigé dans le sens opposé à la direction d'avance (A). L'effort (F) appliqué à l'extrémité de la partie active (6) a tendance à faire pivoter le soc (3) autour de l'arête inférieure avant (10) du support (2). Le dispositif d'appui (8) est conformé de manière à verrouiller ce pivotement du soc (3) autour de l'arête inférieure avant (10) du support (2) lors du travail. Le dispositif d'appui (8) empêche le décollement de la partie de liaison (5) du soc (3) par rotation autour de l'arête inférieure avant (10) grâce à l'appui du dispositif d'appui (8) contre le versoir (4) lors du travail. L'effort (F) appliqué à l'extrémité de la partie active (6) transite par le dispositif d'appui (8) pour être encaissé par le versoir (4) et finalement par le support (2). Etant donné que le dispositif d'appui (8) est disposé dans le voisinage de la rive (11) et que la face d'appui (12) dépasse de cette rive (11), l'effort appliqué au niveau du dispositif d'appui (8) est réduit par rapport à l'effort (F) au niveau de la partie active (6). La face d'appui (12) est disposée de préférence au plus loin de l'arête inférieure avant (10) du support (2). On remarque que le dispositif d'appui (8) est disposé au-dessus du dispositif de fixation (7). Le dispositif d'appui (8) est sensiblement dirigé suivant la direction d'écoulement de la bande de terre découpée par le soc (3). La face d'appui (12) du premier exemple de réalisation présente un angle (α) par rapport à la rive (11) de la partie de liaison (5). Cet angle (α) est compris entre 20° et 70°, de préférence l'angle (α) est compris entre 40° et 50°. La face d'appui (12) est constituée d'un plan unique ce qui simplifie la fabrication dudit soc (3). La mise en place du soc (3) sur le support (2) s'effectue par une translation dirigée dans le plan de la face d'appui (12), perpendiculairement à la rive (11).

Comme le dispositif d'appui (8) est disposé dans l'ombre du versoir (4), celui-ci est protégé contre l'usure. Sensiblement derrière le versoir (4), le dispositif d'appui (8) n'est pas directement en contact avec la terre et ne provoque ni de freinage de la terre ni de bande de collage. Pour pouvoir assurer un contact entre le dispositif d'appui (8) et le logement correspondant (9) lors du travail, un interstice fonctionnel est prévu entre la rive (11) du soc (3) et le bord inférieur (24) du versoir (4). Cet interstice est suffisamment petit pour éviter une accumulation de terre entre le soc (3) et le versoir (4).

C'est le dispositif d'appui (8) qui a pour rôle de reprendre l'effort (F) grâce à son contact contre le logement correspondant (9). Le dispositif de fixation (7) n'est donc pas sollicité lors du travail. Le montage du dispositif de fixation (7) est flottant, il autorise un degré de liberté au soc (3). Ainsi le soc (3) peut se décoller quelque peu du support (2). Il peut pivoter autour de l'arête inférieure (10) du support (2). Ainsi le dispositif de fixation (7) est avantageusement du type rapide dont la mise en place se fait avec ou sans outil. Il assure seulement le maintien du soc (3) sur le support (2) lorsque l'outil (1) ne travaille pas, par exemple lors du transport. Il empêche le soc (3) de tomber lorsque l'outil de travail (1) n'est plus en terre. Un tel outil (1) est monté sur une machine agricole ou sur un engin de travaux publics destiné à travailler le sol. Lorsque la machine ou l'engin est remisé et repose simplement sur le sol, le soc (3) est maintenu sur le support (2) par le dispositif de fixation (7) et il n'est plus en contact avec le logement (9) correspondant.

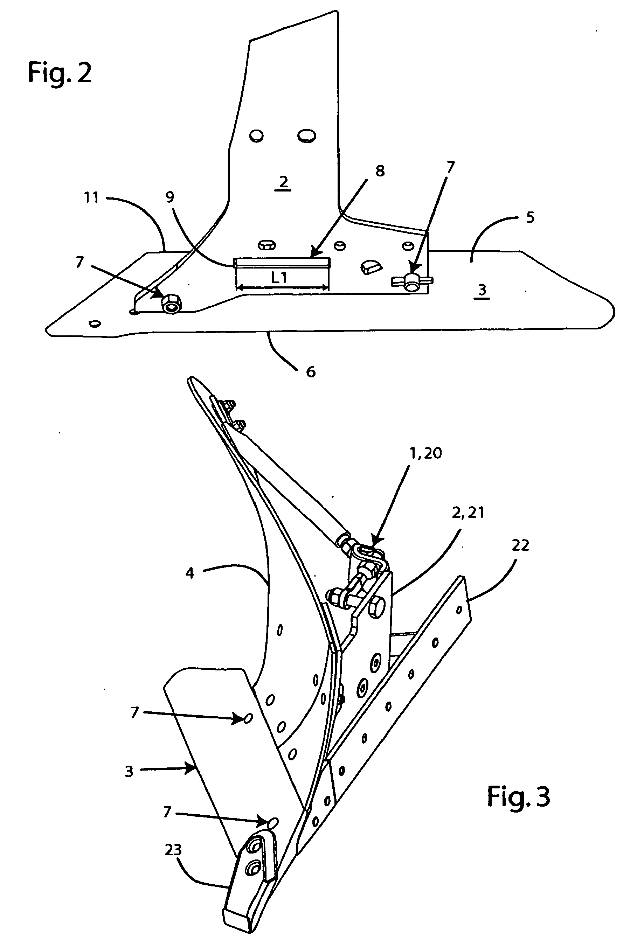

D'après la figure 2, le dispositif d'appui (8) est disposé au voisinage de la rive (11) supérieure de ladite partie de liaison (5) dudit soc (3) à l'opposé de la partie active (6). La rive (11) de la partie de liaison (5) est aussi appelée le bord supérieur du soc (3). Le dispositif d'appui (8) s'étend sensiblement dans la partie médiane de l'outil (1) et présente une longueur (L1). Le dispositif d'appui (8) s'engage dans une ouverture correspondante ménagée dans le support (2). Cette ouverture fait office de logement (9) pour le dispositif d'appui (8). L'ouverture présente une longueur correspondante à la longueur (L1). De cette manière, le positionnement du soc (3) sur son support (2) est précis. L'ouverture est disposée sensiblement dans la partie médiane du support (2). Pour une bonne transmission de l'effort (F), la face d'appui (12) vient s'appuyer contre une face correspondante de l'ouverture. Les contraintes au niveau du dispositif d'appui (8) dues à l'effort (F) sont ainsi davantage réparties comme les deux faces de contact sont grandes et inclinées.

Le dispositif d'appui (8) est réalisé de manière à rester dans l'épaisseur du support (2). De ce fait, le dispositif d'appui (8) ne sera pas usé par frottement de la terre et le contact entre les deux faces ne sera pas altéré. Néanmoins, il est possible que le dispositif d'appui (8) dépasse au-delà de l'épaisseur du support (2), du fait des variations d'épaisseur et de formes du soc (3) et du support (2) résultant des tolérances de fabrication. Pour assurer un contact optimal, il est essentiel que la face d'appui (12) et la face correspondante de l'ouverture soient complémentaires et que l'état de surface respectif soit de bonne qualité.

Dans ce premier exemple de réalisation, le soc (3) est solidarisé par deux dispositifs de fixation (7), un étant disposé à chaque extrémité du support (2) de part et d'autre du dispositif d'appui (8). Sur la figure 1, on peut remarquer que les deux dispositifs de fixation (7) sont différents. En règle générale, le soc (3) est toujours solidarisé avec deux dispositifs de fixation (7) identiques. Il s'agit de dispositif de fixation bien connu. Le premier dispositif de fixation, le plus répandu, est du type boulon. Le montage de ce dispositif de fixation avec des boulons devra être flottant. Ce premier dispositif de fixation n'est pas du type rapide. Avantageusement, la tête de vis est noyée dans le soc (3) pour ne pas gêner l'écoulement de la terre et ne pas être détériorée par les frottements de la terre. Le deuxième dispositif de fixation est du type rapide tel qu'une tige à clavette. L'emploi d'une tige à clavette permet de réduire la durée d'intervention lors du remplacement des socs (3) usés ou endommagés. De manière alternative et non représenté sur les figures, le dispositif de fixation (7) est directement prévu sur le soc (3) sous la forme d'un embout. Cet embout peut soit être rapporté par soudage ou soit obtenu en même temps que la fabrication du soc (3). L'embout passe alors au travers du support (2) et est bloqué sur le support (2) au moyen d'un écrou s'il s'agit d'un embout comportant un filet. Dans ce cas, la surface du soc (3) destinée à être en contact avec la terre s'affranchit d'un perçage et il n'y a pas d'accumulation de terre.

La figure 3 représente une vue de face d'un outil de travail du sol (1) selon l'invention, il s'agit d'un corps de labour (20). D'une façon connue, le corps de labour (20) comporte un sep (21) sur lequel sont fixés un versoir (4), un contresep (22) et un soc (3). Dans cet assemblage, le support (2) est désigné comme étant le sep (21). Le soc (3) découpe ou tranche une bande de terre qui est ensuite retournée par un versoir (4) lors du déplacement d'une charrue (non représentée). Le soc (3), qui est en contact avec la terre, est donc une pièce fortement soumise à l'usure. Le sep (21) est, quant à lui, la pièce centrale du corps de labour (20), car c'est sur celui-ci que viennent se fixer les autres pièces principales (3, 4, 22). Le sep (21) soutient notamment le soc (3) et le versoir (4). Le contresep (22) glisse sur le fond du sillon quand la charrue avance et le soc (3) découpe la terre horizontalement. La bande découpée est alors soulevée par le soc (3) et est retournée par le versoir (4). La partie verticale de la bande de terre est, quant à elle, découpée par un aileron coutre (non représenté). D'une manière connue, le soc (3) est cambré pour faciliter le soulèvement de la bande de terre. Le soc (3) est positionné sur le sep (21) via un dispositif d'appui (8) et est solidarisé sur le sep (21) par l'intermédiaire de deux dispositifs de fixation (7).

D'une manière généralement connue de l'homme de l'art, les charrues comportent plusieurs corps de labour (20) qui sont disposés l'un derrière l'autre et le corps de labour (20) via le sep (21) est fixé au bâti d'une charrue par l'intermédiaire d'un age. Grâce au dispositif d'appui (8) de chacun des socs (3) et de l'ouverture correspondante, la position du soc (3) sur le sep (21) est identique pour chaque corps de labour (20). Ainsi pour une charrue comportant quatre corps de labour (20), la profondeur de labour est identique sur toute la largeur de travail de la charrue. Pour prolonger la durée de vie du soc (3), il est connu d'équiper ce dernier d'une pointe amovible (23). La pointe (23) est alors fixée sur la partie avant du soc (3) par l'intermédiaire de deux vis. Il est connu de remplacer la pointe amovible (23) par une pointe amovible réversible (non représentée). Une telle pointe amovible réversible permet d'augmenter la durée d'utilisation.

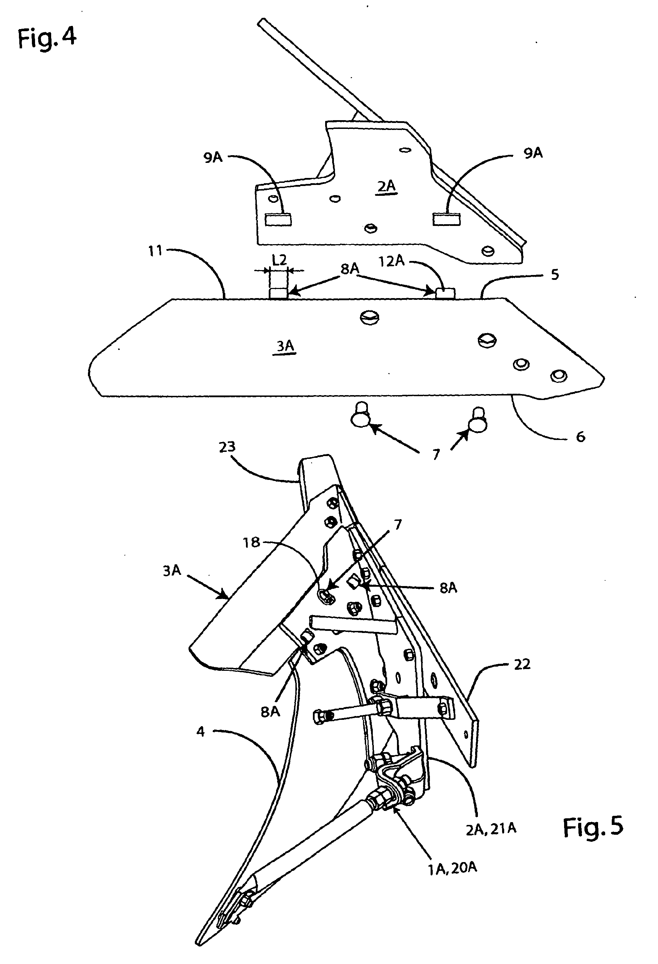

Les figures 4 et 5 représentent un deuxième exemple de réalisation d'un outil de travail conforme à l'invention. Cet outil de travail (1A) comporte un certain nombre d'éléments qui ont été décrits précédemment. Ces éléments garderont, par conséquent, le même numéro de repère et ne seront pas redécrits. Il comporte également un certain nombre d'éléments qui sont comparables à des éléments de l'outil (1) décrit précédemment. Ces éléments seront affectés du même numéro de repère mais suivi de la lettre A. Ils ne seront décrits que si cela s'avère nécessaire.

La figure 4 représente un soc (3A) et un support (2A) selon le deuxième exemple de réalisation. Le soc (3A) comprend une partie de liaison (5) et une partie active (6). La partie de liaison (5) comporte deux dispositifs d'appui (8A) destinés à être engagés dans un logement (9A) respectif ménagé dans le support (2A). Le support (2A) comporte donc deux ouvertures correspondantes. Les dispositifs d'appui (8A) sont disposés en périphérie de la partie de liaison (5) du soc (3A). Les deux dispositifs d'appui (8A) sont écartés l'un de l'autre, la fixation du soc (3A) sur son support (2A) est stable, le pivotement du soc (3A) par rapport à la verticale (roulis) est supprimé. Dans ce deuxième exemple de réalisation, chaque dispositif d'appui (8A) présente une longueur (L2). La longueur (L2) du dispositif d'appui (8A) est moins importante que la longueur (L1) du dispositif d'appui (8). La surface de contact de chaque face d'appui (12A) et la surface correspondante de l'ouverture sont donc plus petites. La forme et l'orientation des dispositifs d'appui (8A) sont identiques au dispositif d'appui (8) selon le premier exemple de réalisation. La face d'appui (12A) de chaque dispositif d'appui (8A) est inclinée de l'angle (α) par rapport à la rive (11). Le soc (3A) est maintenu sur le support (2A) par l'intermédiaire de deux dispositifs de fixation (7). Un des dispositifs de fixation (7) est avantageusement disposé entre les deux dispositifs d'appui (8A) et l'autre est disposé plus en avant sur le soc (3A).

La figure 5 représente une vue de l'arrière d'un outil de travail du sol (1A) selon le deuxième exemple de réalisation. L'outil de travail du sol (1A) est un corps de labour (20A). Ce corps de labour (20A) comporte le soc (3A) selon le deuxième exemple de réalisation. La forme des dispositifs d'appui (8A) permet de contrer uniquement l'effort (F) de travail alors que le dispositif de fixation (7) maintient le soc (3A) sur le sep (21A). Le corps de labour (20A), représenté à la figure 5, est celui appartenant au groupe de corps de labour étant au repos, au dessus du sol, sur une charrue réversible. Le soc (3A) est immobilisé sur le sep (21 A) au moyen d'un seul dispositif de fixation (7). Ce dispositif de fixation (7) est du type rapide. Ce moyen de fixation rapide est constitué d'une tige (16) et d'un élément élastiquement déformable (18). L'élément élastiquement déformable (18) est par exemple réalisé sous la forme d'une goupille automatique. Cette goupille est destinée à être enfilée dans un trou cylindrique ménagé dans la tige (16) pour solidariser le soc (3A) sur son sep (21 A). On remarque que le dispositif de fixation rapide est avantageusement disposé entre les deux dispositifs d'appui (8A). Dans la pratique, l'utilisateur peut aisément mettre en place, ou retirer, ladite goupille en verrouillant ou déverrouillant celle-ci à la main. En manoeuvrant la goupille sans outil, les opérations de montage/démontage sont facilitées et accélérées. Dans un souci de sécurité, les dimensions de la goupille sont définies de telle façon que cette dernière soit parfaitement protégée d'un contact direct avec la terre ou avec des débris végétaux se trouvant dans le sol. Avec ce dispositif de fixation (7) unique, le temps d'échange de l'outil usé par un outil neuf est fortement réduit. Les opérations de changement de soc (3A) se résument donc à ouvrir à la main la goupille et la sortir du trou cylindrique, puis à dégager la tige (16) et le soc usagé. Le soc (3A) neuf est placé sur le sep (21A) en engageant les dispositifs d'appui (8A) dans les ouvertures correspondantes, et est solidarisé finalement par la goupille.

Un tel soc (3, 3A) peut être fixé sur tout type de charrue, à savoir notamment une charrue simple ou une charrue réversible, traînée portée ou semi-portée. Le soc (3, 3A) est amené à être remplacé lorsque ce dernier est usé ou endommagé.

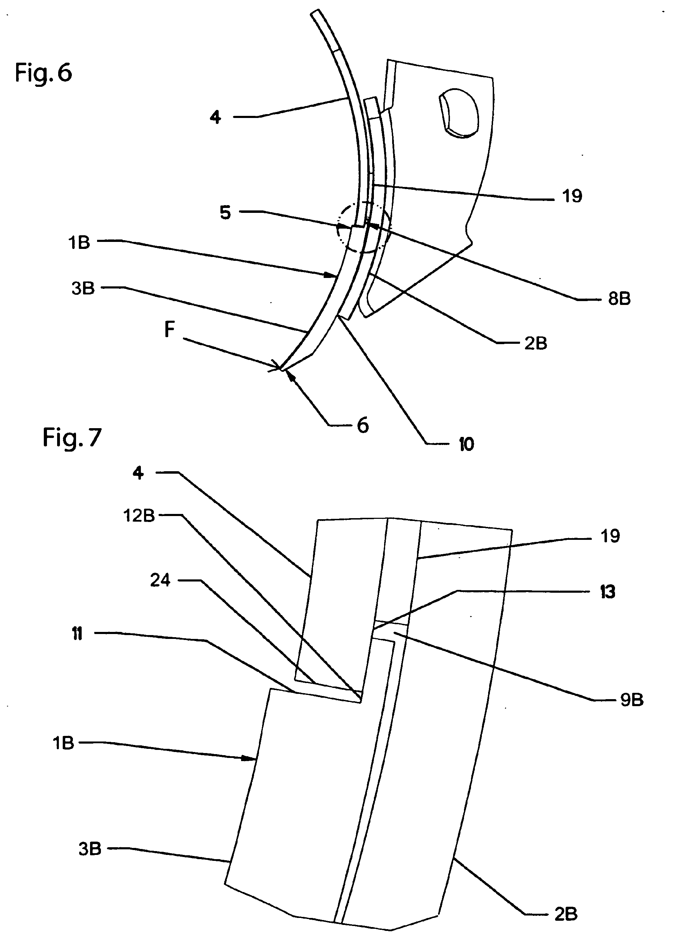

Les figures 6 à 8 représentent un troisième exemple de réalisation d'un outil de travail conforme à l'invention. Cet outil de travail (1B) comporte un certain nombre d'éléments qui ont été décrits précédemment. Ces éléments garderont, par conséquent, le même numéro de repère et ne seront pas redécrits. Il comporte également un certain nombre d'éléments qui sont comparables à des éléments de l'outil (1) décrit précédemment. Ces éléments seront affectés du même numéro de repère mais suivi de la lettre B. Ils ne seront décrits que si cela s'avère nécessaire.

La figure 6 présente une vue de côté d'un outil de travail du sol selon le troisième exemple de réalisation. Le soc (3B) présente un dispositif d'appui (8B) destiné à être engagé dans un logement correspondant (9B). Le logement correspondant (9B) est disposé à l'arrière du versoir (4), et de préférence entre le versoir (4) et le support (2B). Le dispositif d'appui (8B) est disposé dans le voisinage de la rive (11) dans l'ombre du versoir (4).

La figure 7 représente de manière plus détaillée la zone aux environs du dispositif d'appui (8B). Le dispositif d'appui (8B) présente avantageusement une face d'appui (12B) qui est destinée à venir en appui contre le versoir (4) lors du travail. La figure 7 présente le soc (3B) dans l'exécution d'une opération de travail du sol. On remarque que la face d'appui (12B) s'appuie contre une partie de la face arrière (13) du versoir (4) de manière à reprendre l'effort (F) appliqué à l'extrémité inférieure du soc (3B). Le dispositif d'appui (8B) empêche le pivotement du soc (3B) dans le sens anti-horaire en venant s'appuyer à l'arrière du versoir (4). D'une manière particulièrement avantageuse, le dispositif d'appui (8B) est réalisé dans l'épaisseur du soc (3B) dans le voisinage de la rive supérieure (11). La face d'appui (12B) dépasse sensiblement de la rive (11). Elle est sensiblement parallèle à la partie de liaison (5) et perpendiculaire à la rive (11). La face d'appui (12B) s'appuie à l'arrière du versoir (4) contre la face arrière (13).

A la lumière des figures 6 et 7, on constate aussi que l'épaisseur du soc (3B) est plus importante que l'épaisseur du versoir (4). Pour palier à cette différence d'épaisseur, le versoir (4) est monté sur le support (2B) au moyen d'une cale (19). Ainsi, la différence d'épaisseur au niveau de la jonction entre le soc (3B) et le versoir (4) n'est plus très importante. La dimension de cette cale (19) est telle qu'il reste un espace derrière le versoir (4) dans lequel est logé le dispositif d'appui (8B). L'épaisseur du dispositif d'appui (8B) est voisine de l'épaisseur de la cale (19). Pour améliorer le montage, l'épaisseur du dispositif d'appui (8B) est sensiblement inférieure à l'épaisseur de la cale (19). L'épaisseur du dispositif d'appui (8B) est donc très inférieure à celle du soc (3B). Néanmoins, le dispositif d'appui (8B) est suffisamment épais de manière à être suffisamment rigide pour supporter l'effort (F) et assurer la transmission de l'effort (F) vers le versoir (4). En étant positionné derrière, dans l'ombre du versoir (4), le dispositif d'appui (8B) est avantageusement protégé de l'usure car il n'est pas en contact avec la terre. Le dispositif d'appui (8B) peut être obtenu par usinage ou directement lors de la fabrication du soc (3B).

Comme l'effort (F) de travail est récupéré exclusivement par le dispositif d'appui (8B), il ne transite pas par le dispositif de fixation (7) du soc (3B). Par conséquent, le dimensionnement du dispositif de fixation (7) est optimisé par rapport aux charges, sa dimension est réduite. Le dispositif de fixation (7) maintient uniquement le soc (3B) sur le support (2B) lorsque l'outil (1B) ne travaille pas, par exemple lors du transport ou lorsqu'il est remisé et repose simplement sur le sol. Le dispositif de fixation (7) n'a pas la fonction de plaquer le soc (3B) contre le support (2B) mais le montage du soc (3B) sur le support (2B) est flottant. Le dispositif de fixation (7) maintient simplement le soc (3B) sur le support (2B). Cette fonction de maintien peut être réalisée par un dispositif de fixation (7) décrit précédemment. Pour l'invention, il est important que le soc (3B) soit libre de pivoter autour de l'arête inférieure avant (10) du support (2B) pour que le dispositif d'appui (8B) puisse venir s'appuyer contre la face arrière (13) du versoir (4). Le dispositif de fixation (7) selon l'invention doit autoriser un tel pivotement du soc (3B). Le dispositif de fixation (7) doit, par exemple, présenter une certaine souplesse pour se déformer dans le domaine élastique.

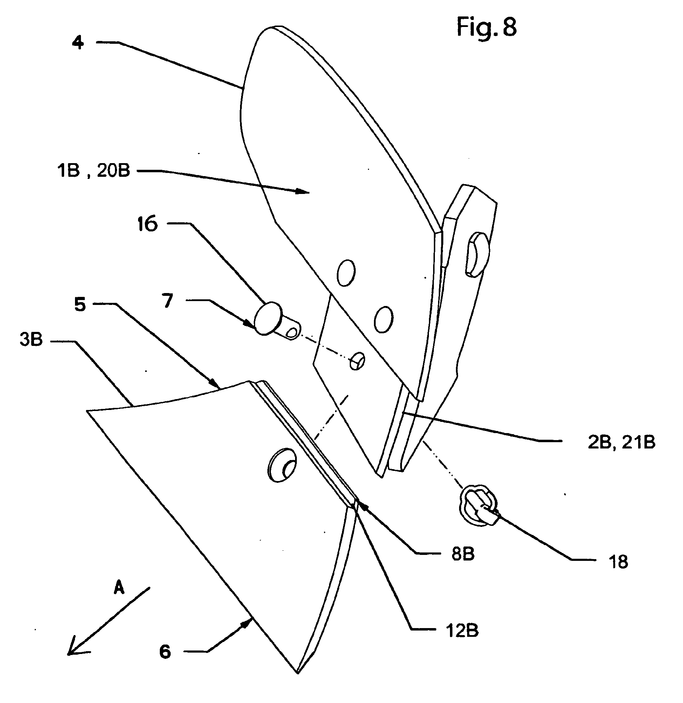

La figure 8 représente un outil de travail du sol (1B) du type corps de labour (20B), selon le troisième exemple de réalisation. Un tel corps de labour (20B) comporte notamment un sep (21B) sur lequel sont fixés un soc (3B) et un versoir (4). Dans le cas d'un corps de labour (1B), le support (2B) est désigné comme étant le sep (21B). Le sep (21B) porte notamment le soc (3B) et le versoir (4). Le corps de labour (20B) est destiné à être monté sur une charrue (non représentée) pour labourer la terre. D'une manière généralement connue de l'homme de l'art, une charrue comporte plusieurs corps de labour (20B) qui sont disposés l'un derrière l'autre et sont fixés au bâti de la charrue par l'intermédiaire d'un age.

Le soc (3B) présente une partie de liaison (5) et une partie active (6). Il découpe une bande de terre qui est retournée par le versoir (4) lors du déplacement. D'une manière connue, le soc (3) est cambré pour faciliter le soulèvement de la bande de terre vers le versoir (4). Le soc (3A) est donc la pièce qui est fortement soumise à l'usure lors du travail et notamment- sa partie active (6). La partie de liaison (5) permet au soc (3B) d'être lié au sep (21B) au moyen d'un dispositif de fixation (7). Le versoir (4) est également lié au sep (21B).

A la lumière de la figure 8, on peut voir que le dispositif d'appui (8B) est avantageusement dans le prolongement de la rive supérieure (11) et sur toute la largeur du soc (3B). De cette manière, l'effort (F) de travail est réparti sur toute la largeur du soc (3B), il n'y a pas concentration en un seul point. Le dispositif d'appui (8B) s'appuie donc sur toute sa largeur contre la face arrière (13) du versoir (4). Pour ce troisième exemple selon l'invention, seul le soc (3B) doit être adapté, c'est-à-dire qu'il doit présenter un dispositif d'appui (8B). Le versoir (4) est du type standard, son bord inférieur est droit. La qualité de l'appui entre le soc (3B) et le versoir (4), c'est-à-dire entre la face d'appui (12B) et la face arrière (13), garantie une transmission optimale des contraintes provoquées par l'effort (F).

Le dispositif de fixation (7) est d'une manière particulièrement avantageuse, du type rapide permettant un échange rapide et aisé des socs (3B). On peut donc prévoir d'adapter le type de soc (3B) en fonction de la nature du sol et de l'utilisation de l'outil (1B). Selon la figure 8, le dispositif de fixation (7) comporte une tige (16) et un élément de verrouillage (18) tel qu'une goupille automatique. La tige (16) présente une tête fraisée d'un côté et un perçage de l'autre côté. La tête de la tige (16) est noyée dans le soc (3B) pour ne pas gêner l'écoulement de la terre et ne pas être détériorée par les frottements de la terre. Pour permettre au soc (3B) d'être en contact avec le versoir (4) au travail, la position du perçage sur la tige (16) est telle qu'il y a un léger jeu possible pour le soc (3B) lorsque la tige (16) est sécurisée par l'élément de verrouillage (18). Ainsi, la distance entre la tête de la tige (16) et le perçage est sensiblement supérieure à l'épaisseur totale du soc (3B) et du support (2B). Dans la pratique, l'utilisateur peut aisément mettre en place ou retirer ladite goupille en verrouillant ou déverrouillant celle-ci à la main. En manoeuvrant la goupille sans outil, l'opération est facilitée et accélérée. Dans un souci de sécurité, les dimensions de la goupille sont définies de telle façon que cette dernière soit parfaitement protégée d'un contact direct avec la terre ou avec des débris végétaux se trouvant dans le sol. Le montage est flottant, il permet au soc (3B) de pivoter légèrement autour de l'arête inférieure (10) du support (2B). Lors du travail, il est aussi possible que la rive supérieure (11) du soc (3B) vienne partiellement en contact avec le bord inférieur (24) du versoir (4). La position de repos, c'est-à-dire lorsque le soc (3B) ne travaille pas, n'est pas représentée sur les figures. Au repos, la face d'appui (12B) n'est pas en contact contre le versoir (4).

Ce dispositif de fixation (7) est positionné avantageusement de manière centrale par rapport à la largeur du soc (3B) et avantageusement dans la moitié supérieure du soc (3B). Il est disposé en dessous du dispositif d'appui (8B). Par l'utilisation d'un seul dispositif de fixation (7), il est nécessaire de verrouiller le pivotement du soc (3B) autour du dispositif de fixation (7). Ce pivotement autour du dispositif de fixation (7) est limité par le versoir (4). La rive supérieure (11) du soc (3B) vient en butée contre le bord inférieur (24) du versoir (4) lors du travail. Le montage du soc (3B) sur le sep (21B) est flottant, c'est-à-dire qu'il y a un jeu au niveau de la jonction entre le soc (3B) et le versoir (4) et entre le soc (3B) et le sep (21B). Ce jeu est réduit lors du travail car le soc (3B) se déplace sensiblement vers le haut contre le bord inférieur (24) du versoir (4) et pivote dans le sens anti-horaire autour de l'arête inférieure avant (10) du sep (21B).

Avec le dispositif d'appui (8B) et le dispositif de fixation (7) rapide, le remplacement d'un soc (3B) usé est simple et surtout rapide. Il suffit : d'écarter l'élément de verrouillage (18), de retirer la tige (16), de glisser un soc neuf à la place du soc usé le long du support (2B) dans la direction du versoir (4) de manière à ce que le dispositif d'appui (8B) s'introduise derrière le versoir (4), de remettre et sécuriser la tige (16) avec l'élément de verrouillage (18). On remarque que grâce à la cale (19) derrière le versoir (4), le soc (3B) peut être monté sur le support (2B) sans avoir à démonter le versoir (4). D'une manière particulièrement avantageuse, les cotes à respecter pour l'assemblage du soc (3B) par rapport au versoir (4) n'ont pas besoin d'être très précises, un jeu fonctionnel plus ou moins important est possible.

Pour chacun des exemples de réalisation, la mise en place du soc sur le support s'effectue par une translation dirigée sensiblement dans le plan de la face d'appui du dispositif d'appui.

Les dispositifs de fixation décrits ci-avant peuvent être utilisés pour les différents exemples de réalisation décrits. D'autres dispositifs de fixation avec un montage non serré peuvent également être envisagés pour assurer le maintien du soc sur son support.

Il est bien évident que l'invention n'est pas limitée aux modes de réalisation décrits ci-dessus et représentés sur les dessins annexés. Des modifications restent possibles dans la limite définie par les revendication.

## Revendications

1. Outil de travail du sol (1, 1A, 1B) comportant un support (2, 2A, 2B) sur lequel sont montés, de manière amovible, un soc (3, 3A, 3B) et un versoir (4), ledit soc (3, 3A, 3B) étant lié audit support (2, 2A, 2B), en dessous et sensiblement dans le prolongement dudit versoir (4), via un dispositif de fixation (7), ledit soc comportant une partie de liaison (5) et une partie active (6), ladite partie de liaison (5) présentant une rive (11) destinée à être proche et en regard du bord du versoir (4) au montage et un dispositif d'appui (8, 8A, 8B) destiné à être engagé dans un logement correspondant (9, 9A, 9B) et destiné à reprendre les efforts (F) lors du travail au moyen d'une face d'appui (12 12A, 12B), ledit dispositif d'appui (8, 8A, 8B) étant disposé dans le voisinage de la rive (11) dudit soc (3, 3A, 3B) et sensiblement dans l'ombre dudit versoir (4), ladite face d'appui (12, 12A, 12B) dépassant sensiblement de cette rive (11) **caractérisé en ce que** le montage dudit soc (3, 3A, 3B) par le dispositif de fixation (7) est flottant.

2. Outil de travail du sol selon la revendication 1, ***caractérisé par le fait* que** ledit logement (9, 9A, 9B) pour ledit dispositif d'appui (8, 8A, 8B) est prévu dans ledit support (2, 2A) ou à l'arrière dudit versoir (4).

3. Outil de travail du sol selon la revendication 1 ou 2, ***caractérisé par le fait* qu'**au travail, ladite face d'appui (12, 12A, 12B) vient s'appuyer contre une face correspondante dudit logement (9, 9A, 9B) pour verrouiller le pivotement dudit soc (3, 3A, 3B) autour de l'arête inférieure avant (10) dudit support (2, 2A, 2B) de manière à reprendre l'effort (F) appliqué à l'extrémité de ladite partie active (6) dudit soc (3, 3A, 3B).

4. Outil de travail du sol selon l'une quelconque des revendications 1 à 3, ***caractérisé par le fait* que** ledit dispositif d'appui (8, 8A, 8B) est disposé sensiblement au dessus dudit dispositif de fixation (7).

5. Outil de travail du sol selon l'une quelconque des revendications 1 à 4, ***caractérisé par le fait* que** ledit dispositif d'appui (8, 8A, 8B) est disposé sensiblement à l'arrière de ladite partie de liaison (5) dudit soc (3, 3A, 3B).

6. Outil de travail du sol selon la revendication 5, ***caractérisé par le fait* que** ladite face d'appui (12, 12A, 12B) présente un angle (α) compris entre 20° et 70° par rapport à ladite rive (11).

7. Outil de travail du sol selon l'une quelconque des revendications 1 à 4, ***caractérisé par le fait* que** ledit dispositif d'appui (8, 8A, 8B) est disposé dans le prolongement de ladite partie de liaison (5) dudit soc (3, 3A, 3B).

8. Outil de travail du sol selon la revendication 7, ***caractérisé par le fait* que** ladite face d'appui (12, 12A, 12B) est sensiblement perpendiculaire à ladite rive (11).

9. Outil de travail du sol selon la revendication 7 ou 8, ***caractérisé par le fait* que** l'épaisseur dudit dispositif d'appui (8, 8A, 8B) est inférieure à l'épaisseur de la partie de liaison (5) dudit soc (3, 3A, 3B).

10. Machine de travail du sol, ***caractérisée par le fait* qu'**elle comporte au moins un outil de travail du sol (1) selon l'une quelconque des revendications 1 à 9.

## Claims

1. Soil-working tool (1, 1A, 1B) comprising a support (2, 2A, 2B) on which are mounted, in a removable manner, a share (3, 3A, 3B) and a mouldboard (4), the said share (3, 3A, 3B) being connected to the said support (2, 2A, 2B), below and substantially in the continuation of the said mouldboard (4), via a fastening device (7), the said share comprising a connection part (5) and an active part (6), the said connection part (5) having an edge (11) intended to be close to and opposite the edge of the mouldboard (4) during mounting and a bearing device (8, 8A, 8B) intended to be engaged in a corresponding housing (9, 9A, 9B) and intended to take up the forces (F) during work by means of a bearing face (12, 12A, 12B), the said bearing device (8, 8A, 8B) being arranged in the vicinity of the edge (11) of the said share (3, 3A, 3B) and substantially in the shadow of the said mouldboard (4), the said bearing face (12, 12A, 12B) projecting substantially beyond this edge (11), ***characterized in* that** the mounting of the said share (3, 3A, 3B) by the fastening device (7) is floating.

2. Soil-working tool according to Claim 1, ***characterized in* that** the said housing (9, 9A, 9B) for the said bearing device (8, 8A, 8B) is provided in the said support (2, 2A) or at the rear of the said mouldboard (4).

3. Soil-working tool according to Claim 1 or 2, ***characterized in* that** during work, the said bearing face (12, 12A, 12B) comes to bear against a corresponding face of the said housing (9, 9A, 9B) to lock the pivoting of the said share (3, 3A, 3B) about the lower front edge (10) of the said support (2, 2A, 2B) so as to take up the force (F) applied at the end of the said active part (6) of the said share (3, 3A, 3B).

4. Soil-working tool according to any one of Claims 1 to 3, ***characterized in* that** the said bearing device (8, 8A, 8B) is arranged substantially above the said fastening device (7).

5. Soil-working tool according to any one of Claims 1 to 4, ***characterized in* that** the said bearing device (8, 8A, 8B) is arranged substantially at the rear of the said connection part (5) of the said share (3, 3A, 3B).

6. Soil-working tool according to Claim 5, ***characterized in* that** the said bearing face (12, 12A, 12B) has an angle (α) comprised between 20° and 70° with respect to the said edge (11).

7. Soil-working tool according to any one of Claims 1 to 4, ***characterized in* that** the said bearing device (8, 8A, 8B) is arranged in the continuation of the said connection part (5) of the said share (3, 3A 3B).

8. Soil-working tool according to Claim 7, ***characterized in* that** the said bearing face (12, 12A, 12B) is substantially perpendicular to the said edge (11).

9. Soil-working tool according to Claim 7 or 8, ***characterized in* that** the thickness of the said bearing device (8, 8A, 8B) is less than the thickness of the connection part (5) of the said share (3, 3A, 3B).

10. Soil-working machine, ***characterized in* that** it comprises at least one soil-working tool (1) according to any one of Claims 1 to 9.

## Patentansprüche

1. Bodenbearbeitungswerkzeug (1, 1A, 1B) mit einer Stütze (2, 2A, 2B), auf der abnehmbar eine Schar (3, 3A, 3B) und ein Abstreichblech (4) montiert sind, wobei die Schar (3, 3A, 3B) mit der Stütze (2, 2A, 2B) unter und im Wesentlichen in der Verlängerung des Abstreichblechs (4) über eine Befestigungsvorrichtung (7) verbunden ist, wobei die Schar einen Verbindungsteil (5) und einen aktiven Teil (6) umfasst, wobei der Verbindungsteil (5) eine Kante (11), die dazu bestimmt ist, nahe und gegenüber dem Rand des Abstreichblechs (4) bei der Montage zu sein, und eine Stützvorrichtung (8, 8A, 8B) aufweist, die dazu bestimmt ist, in eine entsprechende Lagerung (9, 9A, 9B) einzugreifen und die Kräfte (F) bei der Arbeit mittels einer Stützfläche (12, 12A, 12B) aufzunehmen, wobei die Stützvorrichtung (8, 8A, 8B) in der Nähe der Kante (11) der Schar (3, 3A, 3B) und im Wesentlichen im Schatten des Abstreichblechs (4) angeordnet ist, wobei die Stützfläche (12, 12A, 12B) im Wesentlichen diese Kante (11) überragt, ***dadurch gekennzeichnet*, dass** die Montage der Schar (3, 3A, 3B) durch die Befestigungsvorrichtung (7) flottierend ist.

2. Bodenbearbeitungswerkzeug nach Anspruch 1, ***dadurch gekennzeichnet*, dass** die Lagerung (9, 9A, 9B) für die Stützvorrichtung (8, 8A, 8B) in der Stütze (2, 2A) oder hinter dem Abstreichblech (4) vorgesehen ist.

3. Bodenbearbeitungswerkzeug nach Anspruch 1 oder 2, ***dadurch gekennzeichnet*, dass** bei der Arbeit die Stützfläche (12, 12A, 12B) an einer entsprechenden Fläche der Lagerung (9, 9A, 9B) zur Abstützung gelangt, um das Schwenken der Schar (3, 3A, 3B) um die vordere Unterkante (10) der Stütze (2, 2A, 2B) zu verriegeln, um die am Ende des aktiven Teils (6) der Schar (3, 3A, 3B) angelegte Kraft (F) aufzunehmen.

4. Bodenbearbeitungswerkzeug nach irgend einem der Ansprüche 1 bis 3, ***dadurch gekennzeichnet*, dass** die Stützvorrichtung (8, 8A, 8B) im Wesentlichen über der Befestigungsvorrichtung (7) angeordnet ist.

5. Bodenbearbeitungswerkzeug nach irgend einem der Ansprüche 1 bis 4, ***dadurch gekennzeichnet*, dass** die Stützvorrichtung (8, 8A, 8B) im Wesentlichen am Hinterteil des Verbindungsteils (5) der Schar (3, 3A, 3B) angeordnet ist.

6. Bodenbearbeitungswerkzeug nach Anspruch 5, ***dadurch gekennzeichnet*, dass** die Stützfläche (12, 12A, 12B) einen Winkel (α) zwischen 20° und 70° in Bezug zur Kante (11) aufweist.

7. Bodenbearbeitungswerkzeug nach irgend einem der Ansprüche 1 bis 4, ***dadurch gekennzeichnet*, dass** die Stützvorrichtung (8, 8A, 8B) in der Verlängerung des Verbindungsteils (5) der Schar (3, 3A, 3B) angeordnet ist.

8. Bodenbearbeitungswerkzeug nach Anspruch 7, ***dadurch gekennzeichnet*, dass** die Stützfläche (12, 12A, 12B) im Wesentlichen senkrecht auf die Kante (11) ist.

9. Bodenbearbeitungswerkzeug nach Anspruch 7 oder 8, ***dadurch gekennzeichnet*, dass** die Dicke der Stützvorrichtung (8, 8A, 8B) geringer als die Dicke des Verbindungsteils (5) der Schar (3, 3A, 3B) ist.

10. Maschine zur Bodenbearbeitung, ***dadurch gekennzeichnet*, dass** sie mindestens ein Bodenbearbeitungswerkzeug (1) nach irgend einem der Ansprüche 1 bis 9 umfasst.
